(19) **Europäisches Patentamt European Patent Office Office européen des brevets**

(11) **EP 4 043 922 B1**

(12) **EUROPEAN PATENT SPECIFICATION**

(45) Date of publication and mention
of the grant of the patent:
**08.10.2025 Bulletin 2025/41**

(21) Application number: **22155558.4**

(22) Date of filing: **08.02.2022**

(51) International Patent Classification (IPC):
*G01S 13/72* (2006.01) *G01S 13/52* (2006.01)
*G01S 7/41* (2006.01)

(52) Cooperative Patent Classification (CPC):
**G01S 13/72; G01S 7/415; G01S 13/52**

(54) **METHOD FOR THE CLASSIFICATION, DISCRIMINATION AND IDENTIFICATION OF AN ABT OR BALLISTIC THREAT FROM A RADAR SIGNAL**

VERFAHREN ZUR KLASSIFIZIERUNG, UNTERSCHEIDUNG UND IDENTIFIZIERUNG EINER ABT- ODER BALLISTISCHEN BEDROHUNG AUS EINEM RADARSIGNAL

PROCÉDÉ DE CLASSIFICATION, DE DISCRIMINATION ET D'IDENTIFICATION D'UN ABT OU DE MENACE BALISTIQUE À PARTIR D'UN SIGNAL RADAR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2021 IT 202100002867**

(43) Date of publication of application:
**17.08.2022 Bulletin 2022/33**

(73) Proprietor: **MBDA ITALIA S.p.A.**
**00131 Roma (IT)**

(72) Inventors:
• **Caroni, Andrea**
I- 00131 Roma (IT)
• **Cicciu', Ferdinando**
I- 00131 ROMA (IT)

(74) Representative: **Perronace, Andrea et al**
**Jacobacci & Partners S.p.A.**
**Via Tomacelli, 146**
**00186 Roma (IT)**

(56) References cited:
**CN-A- 110 232 518 US-B1- 9 292 792**

• **FABIO BONANNI ET AL: "High Range Resolution (HRR) profiling within low elevation search mode", RADAR CONFERENCE, 2008. RADAR '08. IEEE, IEEE, PISCATAWAY, NJ, USA, 26 May 2008 (2008-05-26), pages 1 - 6, XP031376294, ISBN: 978-1-4244-1538-0**

## Description

## Background art

Generally, a weapon system obtains information on the threat associated with the track data (radar) from the tactical link (using information from the Intelligence and systems of higher order).

If it must operate in a stand-alone mode, it generally has a classification system characterized by a high error probability.

The Threat Evaluation and Weapon Assignment (TEWA) chain of weapon systems operating in a stand-alone mode generally only performs the threat classification function (using surveillance and/or tracking radar tracks) by means of thresholds on the speed and on the Radar Cross Section (RCS) values of the threats tracked.

This results in a low probability of correct classification.

In addition, it does not allow the sub-classification of the ABT threats and the typing (identification) of the threat.

It should be emphasized that the literature includes numerous studies which consider only single aspects of the Classification, Sub-Classification and Identification (or "Typing") matter.

Classification is the function for distinguishing an Air Breathing Target (ABT) radar track from a BM radar track.

ABT threats are all threats other than ballistic missiles (BM). For example, this category (ABT) includes: Cruise missiles, Helicopters, Airplanes (Bomber planes, Fighter planes, etc.), UAVs, ARMs.

Examples of ballistic missiles are (NATO nomenclature as a function of the BM range):

- SRBM: Short Range Ballistic Missile
- MRBM: Medium Range Ballistic Missile;
- IRBM: Intermediate Range Ballistic Missile;
- ICBM: InterContinental Ballistic Missile.

ABT threat sub-classification means the function for determining (after the classification) the class to which an ABT threat belongs (e.g., subsonic missile, helicopter, supersonic missile).

ABT threat identification means the function for determining the probability of the radar track belonging to one of the ABT threats in the database of the previously identified sub-class.

BM threat identification (downstream of the classification) means the function for determining the probability of the radar track belonging to one of the BM threats.

Discrimination means the ability to distinguish (in probabilistic terms) a threatening ballistic object ("re-entry vehicle with warhead") from a booster or debris.

The literature includes scientific publications which deal with the recognition of different planes or of a plane with respect to a cruise missile by means of special radar waveforms (for example: high range resolution profiles), recognition of threats by means of micro-movements, etc.

The prior art does not include an architecture which, using the "standard" information provided by a radar (e.g.: position, speed and covariance matrix), allows the classification and sub-classification of ABT threats, the identification of threats and the discrimination between a threatening ballistic object from a non-threatening one, which is integrated and modular such as to ensure a high performance even against threats highly challenging in terms of Classification, Discrimination, Identification (CDI).

US patent 9292792 relates to a computer-implemented method for classifying a change in the state of a monitored target, in which the measured data of the target are evaluated using a graph structure in which a series of convex envelopes are defined having regions of ambiguity corresponding to classes of targets, in which the intersection of convex hulls for each pair of classes defines the region of ambiguity in the feature space. According to such method, it is necessary to pass from some measured features to others so as to obtain advantages, and this is done dynamically by traversing the aforesaid graph and selecting different sensors which detect the target.

However, necessary conditions to the method are that of not being probabilistic or Bayesian (col.2) since the prior probabilities of classification are all equal and therefore it is necessary to solve the overlapping regions of classification (col. 6) and no methods would be available for determining the parameters of a parametric model based on simple feature vectors (col.7 and 8). Convex envelopes are therefore used under the assumption that it is possible to have different measurement sources, that the state of the rotational motion of the target is estimated (col.19) excluding motions with torques (col.21), and that electric length measurements are made (col.20).

According to the same method, it is also possible to use neural networks which replace the implemented non-probabilistic computation, to go from one node to the other of the graph; such solution, although, is seen as "not robust" due to unexpected variations in the input data, which, in the field, is a condition to be considered frequent.

Apart from the above, the most important matter to keep into consideration in relation to the method of the patent US9292792 is that, despite the various implementation possibilities and the amount of written formulas, it is not proven that passing from one sensor to the other along the graph leads to a convergence and therefore to a sure determination of the classification of the target. Such lack of proof is evident both at the theoretical level and at the numerical level, since at such second level not even an example is provided. Figure 17 exclusively shows the spin of the target in an ideal situation and Figure 18 another ideal case, again related to the spin. There is no evidence that the method works at the output of the graph with the claimed confidence.

Furthermore, the method of the prior art only carries out the classification and not the identification of the ballistic threat, i.e., it does not distinguish the specific type of ballistic threat.

To the knowledge of the Inventor, such method has remained unapplied and instead the need remains for a method which does not make assumptions on the rotational states and electrical lengths, and which takes a fixed set of classical measurements from a radar without having to change sensor and reduce the feature spaces at every step without ensuring convergence and accuracy of recognition. It is desirable that such a method, contrary to that of US9292792, is probabilistic and parametric, and starting from the radar track alone, that it ensures verified and reliable results, while also identifying the specific type of ballistic threat.

## Purpose and object of the invention

It is the object of the present invention to provide a system and method for the classification, ABT sub-classification, identification of weapon threat and discrimination, which solves the issues and overcomes the drawbacks according to the prior art.

The present invention relates to a system and method according to the appended claims.

## Detailed description of embodiments of the invention

### List of drawings

The invention will now be described by way of illustrative non-limiting example, with particular reference to the figures in the accompanying drawings, in which:

- Figure 1 shows a high-level functional architecture of the CDI system according to an embodiment of the invention;
- Figure 2 shows an example of a functional diagram of the CDI process according to the invention;
- Figure 3 shows the block diagram of the classification process;
- Figure 4 shows an example of the speed module (m/s) as a function of the altitude (km) of the ABT and BM threats, in which both the regions in which there are kinematic features of overlapping between BMs and ABTs, as well as the regions where it is possible that there are only BMs are highlighted;
- Figure 5 shows an example of Flight Path Angle (FPA [degrees]) as a function of the altitude (km) of the ABT and BM threats, in which the regions in which there are kinematic features of overlapping between BMs and ABTs, ABT regions and BM regions are highlighted;
- Figure 6 shows an example of mean values of speed module and FPA of ABT threats and BM threats, calculated off-line in a determined altitude range, used during the operational step by the Bayesian networks for classification;
- Figure 7 shows the results of the method for each radar update of the track according to the invention of the classification when BM tracks are in input (nine BMs have been correctly classified as BMs; the samples are the radar updates);
- Figure 8 shows the results of the method according to the invention of the classification when ABT tracks are in input (nine ABTs have been correctly classified as ABTs, i.e., the probability of them being BMs is very low; the samples are the radar updates);
- Figure 9 shows the output of the ABT threat sub-classification;
- Figure 10 shows the trajectories of 4 different types of BM;
- Figure 11 shows the speed module of 4 different types of BM;
- Figure 12 shows the process for identifying the types of BM; and
- Figure 13 shows the output of the BM threat identification.

It is specified here that elements of different embodiments may be combined together to provide further embodiments without restrictions while respecting the technical concept of the invention, as those skilled in the art will effortlessly understand from the description.

The present description further refers to the prior art for the implementation thereof, with regard to non-described detail features, such as elements of minor importance usually used in the prior art in solutions of the same type.

When an element is introduced, it is always understood that there may be "at least one" or "one or more".

When elements or features are listed in this description, it is understood that the finding according to the invention "comprises" or alternatively "consists of" such elements.

Two or more of the parts (elements, devices, systems) described may be freely associated and considered as kits or a system of parts according to the invention.

**Embodiments**

The suggested CDI architecture is the only one (to the knowledge of the Inventors, there are no publications thereon in the literature) which allows classifying a threat as ABT or BM (ballistics), sub-classifying ABT threats, typifying (identify) an ABT or BM threat and possibly discriminating between a threatening and non-threatening ballistic threat (booster/debris), with very high probability of success by using (preferably, exclusively) the radar tracks (position and speed and optionally ballistic coefficient).

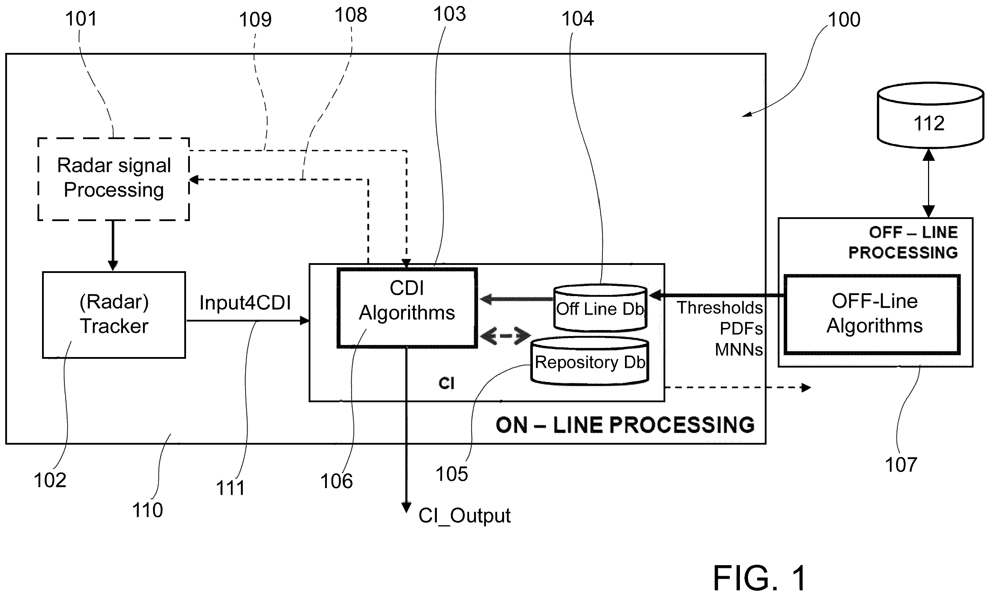

Figure 1 shows the high-level functional architecture of the CDI system 100 according to an aspect of the invention. The input 111 is represented by the report of the radar to the CDI intelligence (computer or equivalent programmable logic, integrated or not with the radar), i.e. (preferably, exclusively) the radar track (of the Signal Processor 101 and of the Tracker 102) which contains: track_id , track_stat (optional), cluster_id (optional), position, speed (coordinates or module) and covariance matrix (associated with the track_id) and optionally the ballistic coefficient.

The off-line algorithms are the algorithms which extract the kinematic features necessary for the CDI intelligence 106, for the generation of thresholds, for the training of the neural networks and for the extraction of the data required for the Bayesian networks. The off-line algorithms will take the ABT and BM threat databases 112 as input.

The track_state tells whether the track is new or not.

The cluster_id is the ability of the radar to associate the parent-child relationship between two or more tracks (e.g.: a track generates one or more tracks, as in the case of a BM missile releasing the booster: in this case the radar opens two distinct tracks which, although, have the same cluster_id).

A complete and completely correct discrimination is feasible only if the radar is capable of providing such parameter.

The operational part is that identified as ON-LINE PROCESSING 110 and represents the architecture which may be implemented at the level C2 (or at the radar level). It comprises algorithms 106 implemented in the intelligence 106, which are connected to one or more databases 104 ("off-line db") and 105 ("Repository db"), for example, for the classification of radar tracks as type and/or historical series of recognitions.

The block 107, identified as OFF-LINE PROCESSING, allows creating a CDI function which is flexible and modular on the variations of the set of potential threats, of the radar used and therefore the operating scenario, using trained algorithms (in Figure 1, CI stands for Classification-Identification, MNN stands for Multi Neural Networks, PDF stands for Probability Density Functions, Thresholds for thresholds).

During the off-line processing, as a function of the threats of the database and the radar which will be used during the operational step (for example, characterized by the maximum azimuth and elevation errors, range error, the opening range of the tracks, etc.):

1. Kinematic thresholds will be identified, which will allow uniquely classifying a BM or an ABT among those in the threat/track database 112. For example, some BMs, during the flight profile thereof, may reach speeds and/or heights considerably greater than those of the ABTs, therefore, if the track data exceeds such threshold, it is uniquely classified as BM.

2. Three different neural networks will be trained with all or a selection of kinematic features (altitude values, speed module, FPA, speed component z, speed module along the down range):

- a network of the MNN type to classify ABTs from BMs (ABTs will have label 0 and BMs will have label 1);
- optionally, a network for discriminating threatening ballistic objects from non-threatening ones (booster/debris): non-threatening objects will be labeled with 0 (label 0) and threatening objects with 1 (label 1);
- a network of the MNN type for typing the BMs (each BM will be identified with the label thereof); in this case, one or more of the following may also be used for identification (in addition to the above kinematic features): apogee, apogee speed module, range, Flight Path Angle (FPA) at impact, speed module at impact.

3. Three databases will be created/employed for the use of three Bayesian networks adapted (i) one to operate for the ABT/BM classification, (ii) one to sub-classify and identify the types of ABTs, (iii) one to identify the type of threatening BM (optional, if the threat has already been discriminated as irrelevant, this step may be skipped), as follows:

(i) The off-line database 104 to classify between BM and ABT threat may be realized as follows:

a. The kinematic performances of the BMs and ABTs may be corrupted with the radar noise which will be used at the operational level and may generate N new trajectories corrupted by the noise;

b. For each predefined altitude range (e.g.: every 5 km of altitude), the kinematic features of the ABTs and BMs for each trajectory (ideal and corrupted by noise) may be considered. Of the BMs, the ascending step (from the launch point to the apogee) and the return step (from the apogee to the point of impact) are considered separately. This is because the FPA in the ascending step has the same value and opposite sign as the return step, given the same altitude $(FPA = \text{asin}(\frac{v_z}{\sqrt{v_x^2 + v_y^2 + v_z^2}})$, and the averages and variances of each thereof, which will be used by the Bayesian networks, are evaluated. It is possible that there are ranges of heights in which only one type of threat is present (e.g.: BM).

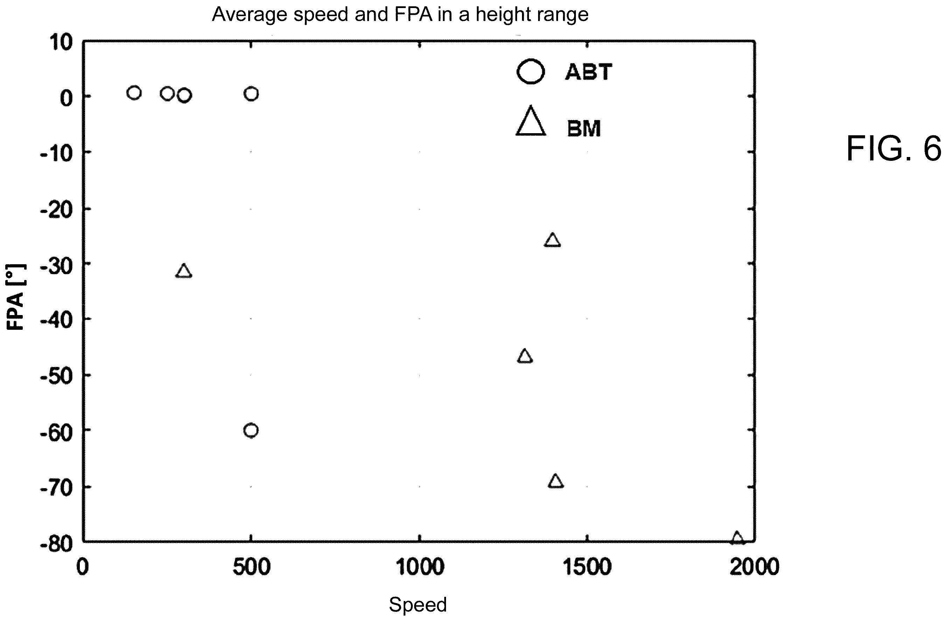

Practically, for each altitude range, the number of possible ABTs and BMs existing in that height range is stored (the ABTs will have an identifying Id different from the BMs), and each threat is associated with the mean value and variance of each kinematic feature of interest (FPA, velocity module, etc.), as in Figure 6;

(ii) The database 104 for sub-classifying and identifying the ABT threats may be created as follows:

a. The kinematic performances of the ABTs may be corrupted with the radar noise and may generate N new trajectories corrupted by the noise;

b. For each preset altitude range (e.g., every 2 Km of altitude), the kinematic features of the ABTs may be considered and the averages and variances of each thereof, which will be used by the Bayesian networks during the operational step (ON-LINE), are calculated. It is possible that there are ranges of heights in which only one type of ABT threat and/or sub-class is present.

For each range of height, it is possible to store the number of possible ABTs existing in that altitude range (each ABT has an identification ID) and each of them is associated with the mean value and variance of each kinematic feature of interest (FPA, speed module, etc.).

(iii) The database for identifying the type of BM may be created as follows:

For each BM (identified by an ID) one or more of the following values are saved: range, apogee, apogee speed module, speed module at impact, FPA at impact and related variances.

The method for calculating the thresholds and for extracting the features may be automated. This approach allows reusing algorithms developed for different systems, it reduces costs and time, and produces a CDI platform which is independent from the threat database 112 and which may only be managed nationwide. In general, this off-line module may use any kinematic threat database.

As an example of threshold classification, one or more of the following steps may be performed:

- comparing the speed module of the track, calculated based on said speed components, with a predetermined ABT speed threshold and a predetermined ballistic speed threshold which are stored in a first database 104;
- comparing the altitude of the track with a predetermined ABT altitude threshold and a predetermined ballistic altitude threshold;
- comparing the FPA angle value derived from the track with a predetermined ABT FPA threshold and a predetermined ballistic FPA threshold;
- determining whether the track belongs to a ballistic threat if the speed module of the track is greater than said ballistic altitude threshold or the altitude is lower than said ABT altitude threshold;
- classifying the track as an ABT threat if the speed module of the track is lower than said ABT speed threshold or the altitude of the track is lower than said ABT altitude threshold;
- associating the ID with the classification as ABT or ballistic threat based on the steps B3 or B4, in which a sure-classification parameter is further associated with the classification.

The Off-Line algorithms extract the statistical "features" (Thresholds, Parameters of the Gaussian Probability Density Functions - PDFs - i.e., means and variances of the kinematic features of the threats) and train the neural networks for the recognition of the treats of the related database 112. Features and Neural Networks are the "tactical and operational" database 104 which is used by the CDI algorithms. This process, automated, allows selecting the best set of parameters according to the threats (requirement) and the radar accuracies in an "optimal" manner.

The On-line algorithms allow evaluating the CDI performances associated with each radar track update at the operational level.

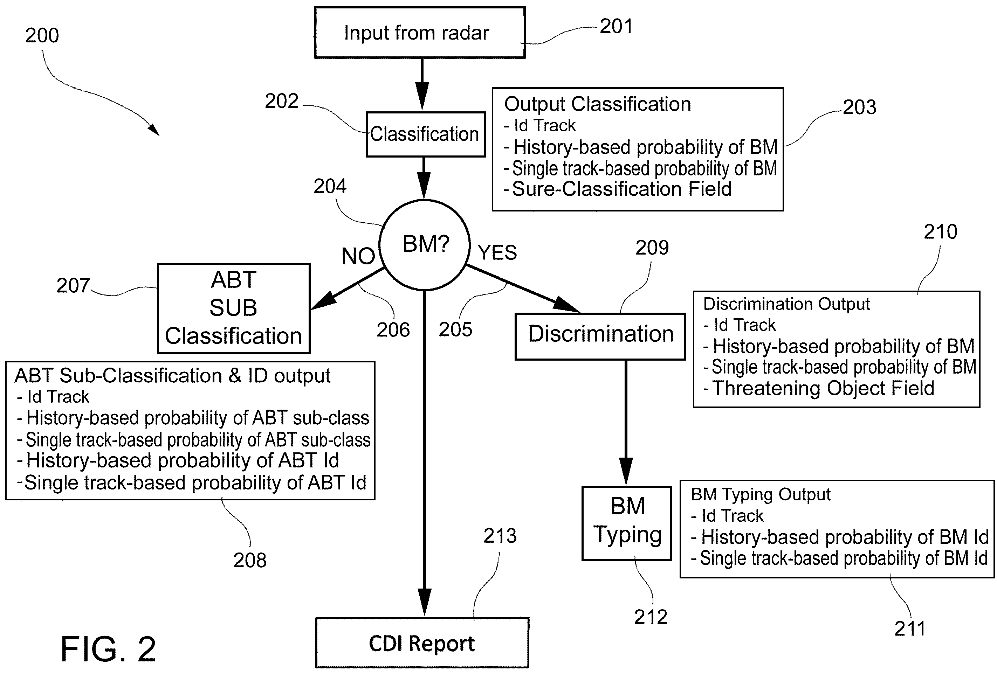

More specifically, according to an aspect of the invention, with reference to the exemplary diagram 200 in Figure 2, the classification block 202 receives as input 201 from the radar (not shown) the values of one or more of the parameters in the group: Track ID, Acquisition time, track state (optional, for example, 0 for a new track and 1 for a non-new track), cluster id (optional), vector state (comprising, for example, position coordinates and speed coordinates), covariance matrix, ballistic coefficient (optional).

Here, it is the object of the classifier to estimate in 204 whether the "target" associated with the track is ballistic or non-ballistic, and this is determined based on output parameters 203 of the classification 202 comprised in the group: Track ID, Track State (optional), current track-based probability of BM threat (ABT and BM prior probability equally probable), history-based probability of BM threat (ABT and BM prior probability given by the average of the respective probabilities of the previous tracks associated with the same Track ID), and sure-classification field (optional).

In the case 206 in which it is not BM, it is the object of the ABT sub-classification 207 to evaluate the probability that the ABT ("target" estimated by the "non-ballistic" classification) belongs to one of the ABT sub-classes (FW- Fixed Wings, HELO-Helicopter, Subsonic missile, Supersonic missile, etc.), and as output there are one or more parameters selected from the group 208: Track ID, single track-based probability of ABT-sub-class, history-based probability of ABT-sub-class.

In the case 205 in which it is not an ABT threat, there is a passage to block 209 of the BM for the discrimination between threatening and non-threatening ballistic object, based on the discrimination output comprising track ID, track-based probability of BM typing, history-based probability of BM typing, and relevant threat field (optional).

Immediately after, there is a passage to block 212, the object of which is to calculate the probability that it belongs to a specific type of BM (identification). The output 211 of the block 212 will comprise one or more of the following parameters: track ID, track-based probability of BM typing, history-based probability of BM typing.

An overall report of the recognition in 213, comprising one or more of the following data, may be issued: Track ID, time, track state, safe classification, current track-based probability of BM threat (classification), history-based probability of BM threat (classification), single track-based probability of ABT sub-class, history-based probability of ABT sub-class, single track-based probability of ABT type within the most probable sub-class, history-based probability of ABT type within the most probable sub-class, safe classification, track-based probability of BM type, history-based probability of BM type, track-based probability of ballistic object being threatening, history-based probability of ballistic object being threatening.

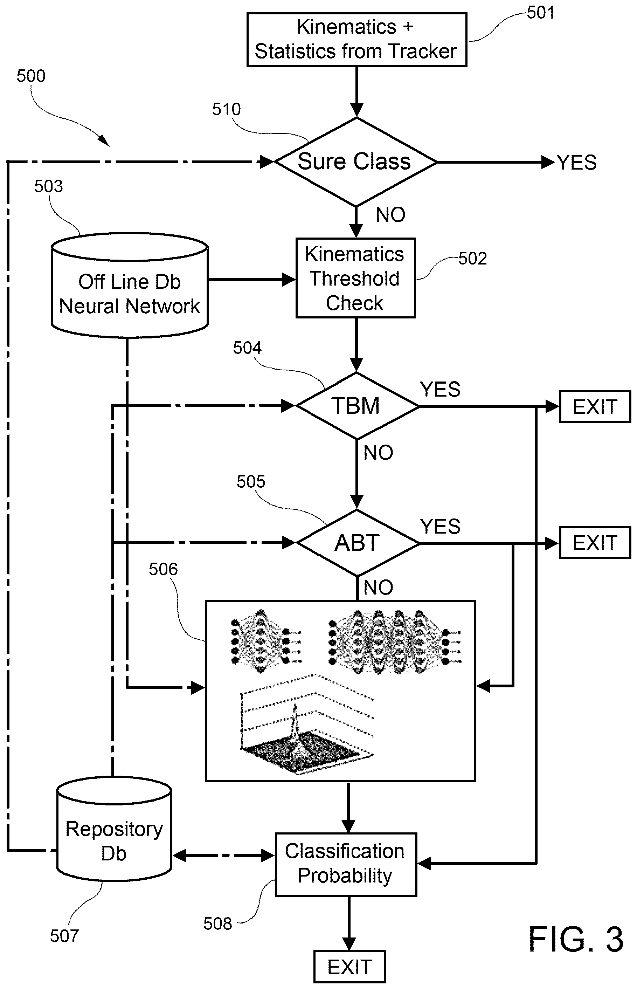

With reference to Figure 3, it is the object of the method 500, according to one aspect of the invention, the classification between "Ballistic Threat" (BM type) and "Non-Ballistic Threat" (ABT type).

According to one aspect of the invention, the flow is based on the following steps:

- If the track is new, classification by threshold or thresholds (if existing). If the classification was carried out by means of a threshold, the probability will be 100% or 0% BM (depending on the discriminant provided by the threshold/s) and a field named "sure-classification" will be set equal to 1 (otherwise equal to "0").

- If the track is not new, checking through the CDI output history if the track has the "sure-classification" field equal to 1. In this case, the BM probability will be the same as that associated with the previous track, otherwise, if possible, it will be classified by threshold.

- If the classification by threshold is not possible (or if thresholds are not to be used), classification by Bayesian algorithm and/or multi-layer neural network is carried out.

- The ballistic threat probability may be calculated using the historical probabilities if the track data is not new.

Such algorithms receive as input, in 501, the track ID, the kinematic data (e.g., position and speed), the covariance matrix provided by the radars on position and speed and optionally the track state (which indicates whether the track is new or not), the ballistic coefficient of the object (e.g., given in $Kg/m^2$), and provide as output in 508: the track ID, the probability ("classification probability") of the threat being ballistic based on a single track (the ABT threat is clearly given by 1 - the ballistic probability), the probability of the threat being ballistic considering the history, the value of the sure-classification field (optional).

In 502, if the track is not new and in the report of the classification in the previous state (saved in 508) the "sure-classification" field ("sure class", verified in 510) is equal to 1 (the classification is sure), the probability that it is a BM threat is equal to that of the previous state.

If the track is new, in 502 the method consults an off-line database 507 of parameter thresholds calculated from the kinematic features of the database threats to be compared with the current inputs 501 from the radar. It is possible to have the following threshold checks in 504 and 505.

According to an aspect of the invention, it is possible to compare the speed module of the track, calculated based on said speed components, with a predetermined BM and/or ABT speed threshold.

According to a further aspect of the invention, the altitude of the track may be compared with a predetermined ABT and/or BM altitude threshold.

According to a further aspect of the invention, the FPA of the track may be compared with a predetermined ABT and/or BM FPA threshold.

According to a further aspect of the invention, kinematic features provided by the radar may be compared jointly with those of predetermined thresholds (i.e., two or more comparisons must be satisfied).

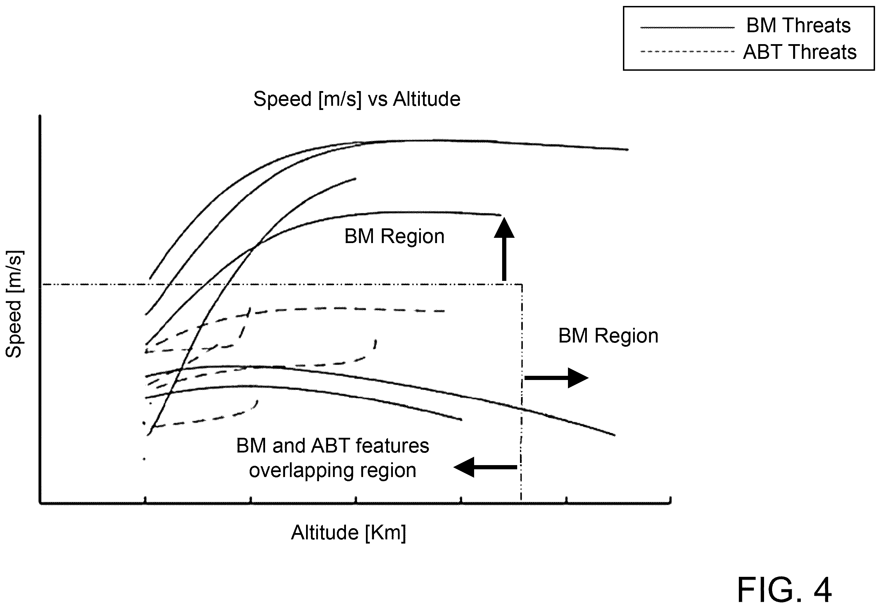

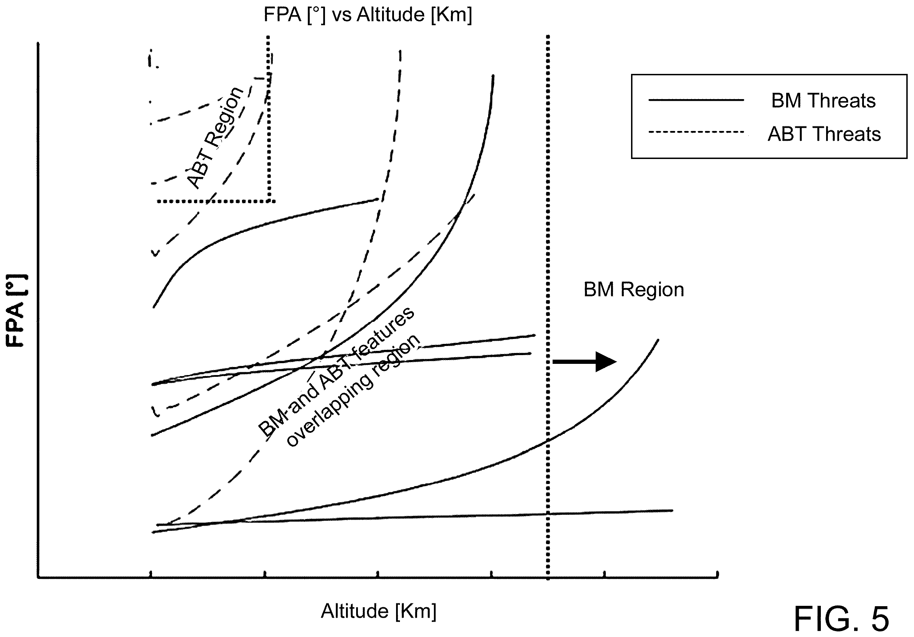

In this respect, reference may be made to the examples in Figures 4 and 5, in which the BM regions, the ABT regions and the regions in which the ABT and BM kinematic features may be considered overlapping are highlighted.

The features used for the threshold classification are one or more of:

- Height (altitude);
- Speed module; and
- Flight Path Angle (with respect to the horizontal plane), or "FPA", calculated, for example, as arcsen($v_{up}$/|v|), where $v_{up}$ is the speed component along the direction of gravity and |v| the speed vector module (ENU system)
- Z component of speed.

If the classification by threshold is not possible and/or the sure-classification field is equal to "0", classification by Bayesian algorithm and/or multi-layer neural network in block 506 may be carried out.

During the operational/tracking step for each radar track data (given as input to the Bayesian network), the probability P that the threat being tracked is ballistic is estimated by a Bayesian network and/or by a network of the Multi Neural Network type (MNN), trained by virtue of the threat databases 503.

Some examples and explanations regarding such estimate are provided below.

Bayesian network for classification

According to an exemplary aspect of the present invention, according to the height provided by the track data 501, the mean values and the variances of the FPA and the speed module of the BMs and the ABTs at that height are taken from the database 503 (obtained off-line as described above).

The conditional Gaussian probability densities for ABT threats and BM threats potentially present in the considered height range are calculated assuming that the threat is ABT and assuming that it is BM (conditional probability of the ABT and BM observation).

The prior probabilities may be considered equally probable ($P_{BM}$ = 0.5, $P_{AST}$ = 0.5) if there is a new track and in the case of a single-track probability calculation (otherwise, the prior probabilities are provided by the previously calculated probabilities associated with the track).

To simplify, we report below a clarifying example.

Assuming that the track data associated with the track ID "20" is the following: 47000 (x coordinate), 0 (y coordinate), 28000 (z coordinate), -600 (x speed component), 0, -800 (z speed component), 900,900,900 (standard deviation along x, y, z), 225,225,225 (standard deviation of the speed along x, y, z). $FPA = \text{asin}(\frac{v_z}{\sqrt{v_x^2+v_y^2+v_z^2}})$ is

therefore equal to -53.13° and the speed module is equal to 1000 m/s.

Assuming that in the range of heights between 25,000 and 30,000 [m] in height there are potentially 3 threats for which the values of the quantities of interest have been estimated off-line, specifically:

- 1 BM threat with mean speed value equal to 950 [m/s], relative standard deviation of 160 [m/s]², mean FPA value equal to -48° and standard deviation equal to 100 [degrees]²;

- 1 ABT threat with mean speed value equal to 800 [m/s], relative standard deviation ($\sigma_{|v|}^2$) of 160 [m/s]², mean FPA value equal to -20 [degrees] and standard deviation ($\sigma_{FPA}^2$) of 100; and

- 1 ABT threat with mean speed value equal to 900 [m/s], relative standard deviation of 160 [m/s]², mean FPA value equal to 1 and standard deviation equal to 100.

The prior probabilities, without considering the history of the track ID, are:

$$\Pr(BM) = \Pr(ABT) = 0.5$$

Current probabilities are calculated using the 2-D Gaussian probability density function, given by

$$p(z) = \frac{1}{2\pi \, ||\Sigma||^{1/2}} e^{\left(-1/2(z-\mu)^T \, \Sigma^{-1}(z-\mu)\right)}$$

where (T stands for transposed):

- z is the measurement provided by or obtained from the track data (Speed module and FPA):

$$z = (|V|, FPA)$$

- $\Sigma$ is the covariance matrix associated with the measurements (provided by the database calculated off-line and by the radar measurements):

$$\sum = \begin{pmatrix} \sigma_{|V|}^2 & 0 \\ 0 & \sigma_{FPA}^2 \end{pmatrix}$$

and $\mu$ are the mean values of the speed module and the FPA angle of each threat calculated off-line and present in the database.

By replacing the 2-D Gaussian probability density function with the corresponding quantities, Pr(z/BM), Pr(z/ABT1) and Pr(z/ABT2) are calculated, thus obtaining:

$$\Pr(z/BM) = 1.11e - 6$$

$$\Pr(z/ABT1) = 1.82e - 35$$

$$\Pr(z/ABT2) = 7.8022e - 12$$

At this point, the probability of the observed track being a BM may be calculated using Bayes' theorem:

$$P(z = balistico) = \frac{\sum_{i=1}^{N_{TBM}} P(z/TBM_i) \times P(TBM_i)}{\sum_{i=1}^{N_{TBM}} P(z/TBM_i) \times P(TBM_i) + \sum_{i=1}^{N_{ABT}} P(z/ABT_i) \times P(ABT_i)}$$

where $N_{TBM}$ (1 in the example) is the number of BMs potentially present (based on the database) at the height provided by the radar, $N_{ABT}$ (2 in the example) is the number of ABTs potentially present (based on the database) at the height provided by the radar.
Pr(z = BM) = 1 is obtained.

MNN NETWORK for classification

The probability P that the threat being tracked is ballistic may be calculated alternatively or additionally by means of an MNN network (or, more generally, a trained algorithm) trained off-line using the kinematic features (or a subset thereof) described above (e.g., height, speed module and FPA of ABT threats and BM threats along the entire flight path).
If both the Bayesian and the MNN networks are used, the ballistic probability is given as the average of the probabilities provided in output thereby.
The kinematic features or quantities mentioned so far may be the same or differ in the various processings through comparison of thresholds, Bayesian or trained algorithms, even with partial overlap.

Examples of probability of classification obtained in specific cases

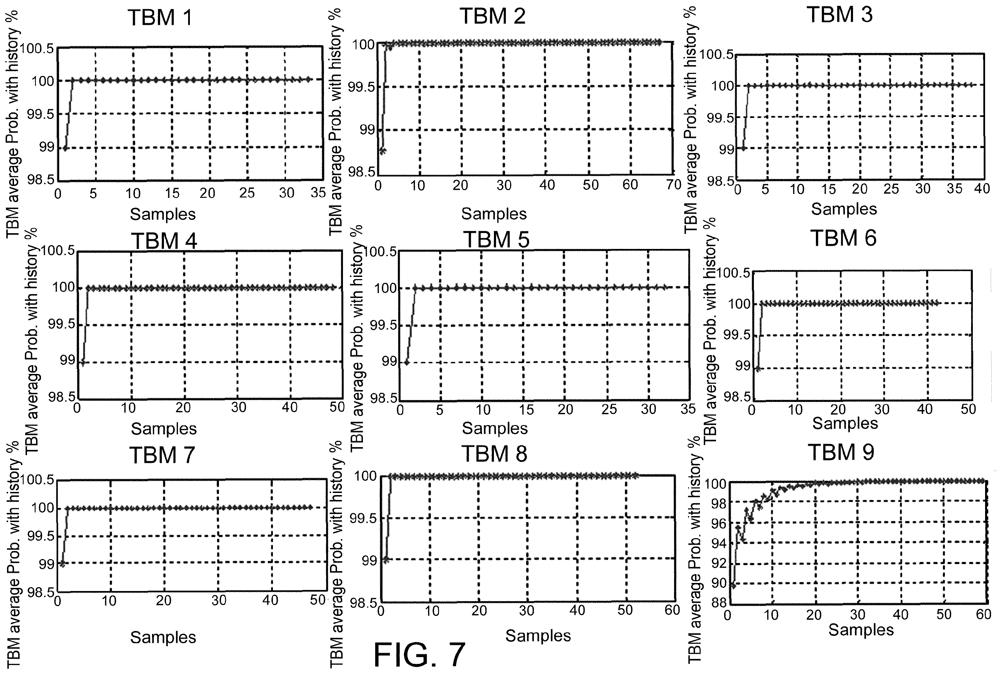

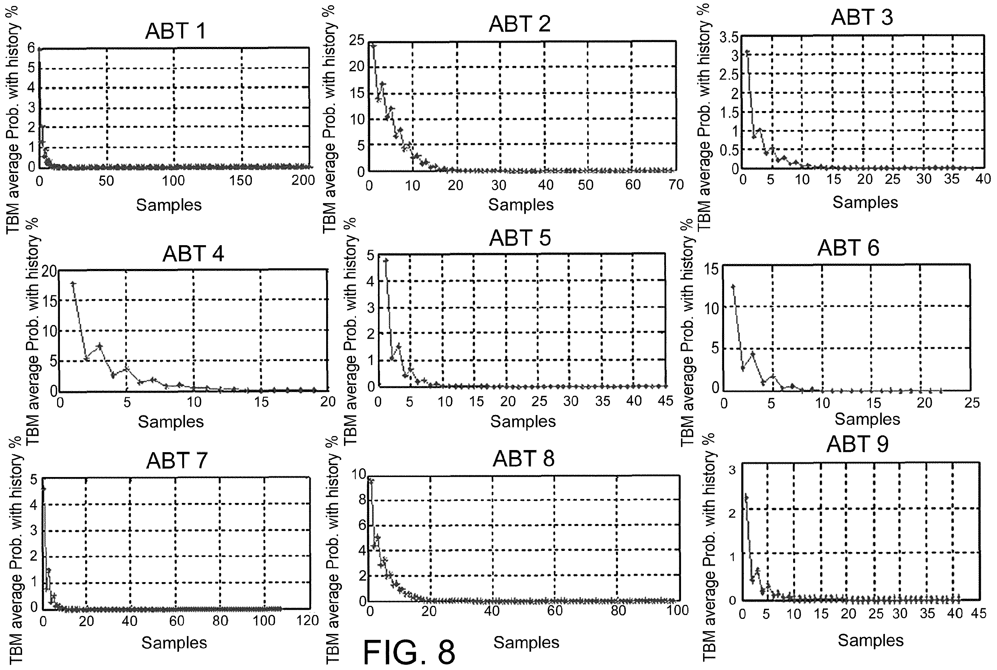

Figure 7 shows the probabilities (ordinate) of BM for nine different cases of BM threat classification, and Figure 8 shows the probabilities (ordinate) of BM for nine different cases of ABT threat classification. The track over time ("samples") is provided in the abscissa of both Figures. As it may be seen, the classification with the method of the invention is excellent.

Bayesian network for ABT sub-classification and typing

Using the same methodology as above, by means of the Bayesian networks, sub-classification and typing of the ABT threats is also obtained if the track under investigation has been estimated to be an ABT.
An example of ABT sub-classification and typing with 10 types gave the following results:

| Prob. ABT1 | Prob. ABT2 | Prob. ABT3 | Prob. ABT4 | Prob. ABT5 | Prob. ABT6 | Prob. ABT7 | Prob. ABT8 | Prob. ABT9 | Prob. ABT10 |
| --- | --- | --- | --- | --- | --- | --- | --- | --- | --- |
| 0.1 | 0.025 | 0.025 | 0.05 | 0.35 | 0.36 | 0.025 | 0.025 | 0.05 | 0.1 |

This means that, at the height provided by the radar track data, there may potentially be 10 ABT threats.
The sub-classification is carried out by adding the probabilities of the types. For example, if ABT 1, ABT 2, ABT 3 and ABT 4 are planes, the plane sub-class is given by the sum of the probabilities of ABT 1, ABT 2, ABT 3 and ABT 4 ($Pr(z/Aereo) = 0,2$) .
If ABT5 and ABT6 are subsonic missiles, the subsonic missile sub-class is given by the sum of the corresponding probabilities $Pr(z/Missile\ Subsonico) = 0,71$ etc.
For the identification, Bayes' theorem is still used:

$$Pr(z/Miss.Sub.\ 1(ABT5)) = 0,35 \times Pr(Miss.Sub.1)/(0,35 \times Pr(Miss.\ Sub.\ 1) + 0,36 \times Pr(Miss.\ Sub.\ 2)) = 0,493$$

where it is assumed that the probability of the track data belonging to one of the two subsonic missiles is equally probable.
For identifying (typing) ABT5 and ABT6, the recognition is not sufficient if the track is new and if the history is not considered; however, an improvement is expected by comparing over time the history of the recognitions stored in the database 507.

Examples of probabilities of sub-classification obtained in specific cases

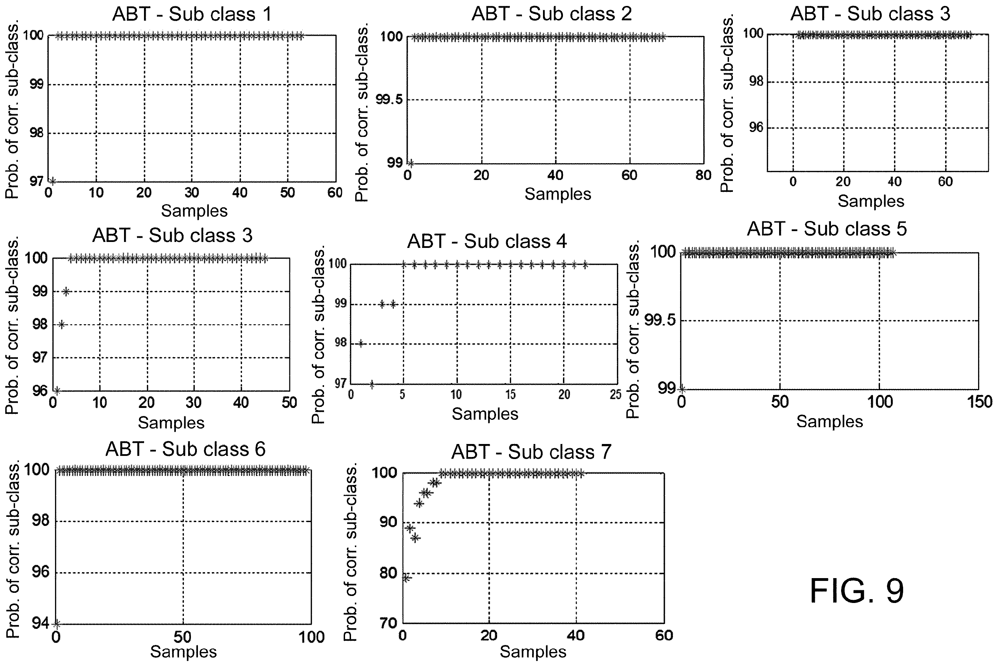

Figure 9 shows the probabilities (ordinates) of BM for eight different cases of ABT threat classification. The track over time ("samples") is provided in the abscissas. As it may be seen, the classification with the method of the invention is excellent.

Discrimination between threatening ballistic object and non-threatening ballistic object

With regard to the discrimination between the threatening ballistic object and the non-threatening ballistic object, optional, the discrimination is possible if, and only if, the radar provides the cluster_id information of each track (and obviously if the BMs of the database are of the bi- stage or multistage type, or release the propulsion systems).
By way of explanation, it is assumed that if a track has cluster_id=0, it means that there is no other radar track which has a parent-child relationship with the track under examination. The threat is therefore 100% threatening.
If, instead, the cluster_id has a value other than 0 (e.g.: cluster_id = 13), it means that there are one or more tracks processed by the radar which have the same cluster_id (classified as ballistic tracks by the classification): only one thereof will be threatening (in the assumption of a single warhead).
The parameters of the track under examination are sent as input to a neural network (trained algorithm) which provides the probability of threatening ballistic object.
The neural network output probability is compared with the probabilities provided by the same network when the tracks with the same cluster_id have been processed in input.
The track is considered threatening if the Pr(threatening BM) is greater than the probabilities Pr(threatening BM) of the other tracks with the same cluster_id.
The following tables:

**Training Confusion Matrix**

|  | Target Class 1 | Target Class 2 |  |
|---|---|---|---|
| Output Class 1 | 159793 / 40.6% | 31781 / 8.1% | 83.4% / 16.6% |
| Output Class 2 | 28835 / 7.3% | 173621 / 44.1% | 85.8% / 14.2% |
|  | 84.7% / 15.3% | 84.5% / 15.5% | 84.6% / 15.4% |

**Validation Confusion Matrix**

|  | Target Class 1 | Target Class 2 |  |
|---|---|---|---|
| Output Class 1 | 34494 / 40.9% | 6775 / 8.0% | 83.6% / 16.4% |
| Output Class 2 | 6307 / 7.5% | 36859 / 43.7% | 85.4% / 14.6% |
|  | 84.5% / 15.5% | 84.5% / 15.5% | 84.5% / 15.5% |

**Test Confusion Matrix**

|  | Target Class 1 | Target Class 2 |  |
|---|---|---|---|
| Output Class 1 | 34160 / 40.5% | 6775 / 8.0% | 83.4% / 16.6% |
| Output Class 2 | 6211 / 7.4% | 37289 / 44.2% | 85.7% / 14.3% |
|  | 84.6% / 15.4% | 84.6% / 15.4% | 84.6% / 15.4% |

**All Confusion Matrix**

|  | Target Class 1 | Target Class 2 |  |
|---|---|---|---|
| Output Class 1 | 228447 / 40.6% | 45331 / 8.1% | 83.4% / 16.6% |
| Output Class 2 | 41353 / 7.3% | 247769 / 44.0% | 85.7% / 14.3% |
|  | 84.7% / 15.3% | 84.5% / 15.5% | 84.6% / 15.4% |

show the result of the discrimination of threatening BMs from Boosters ("confusion matrix", using as input: height, speed module, FPA).

BM Identification

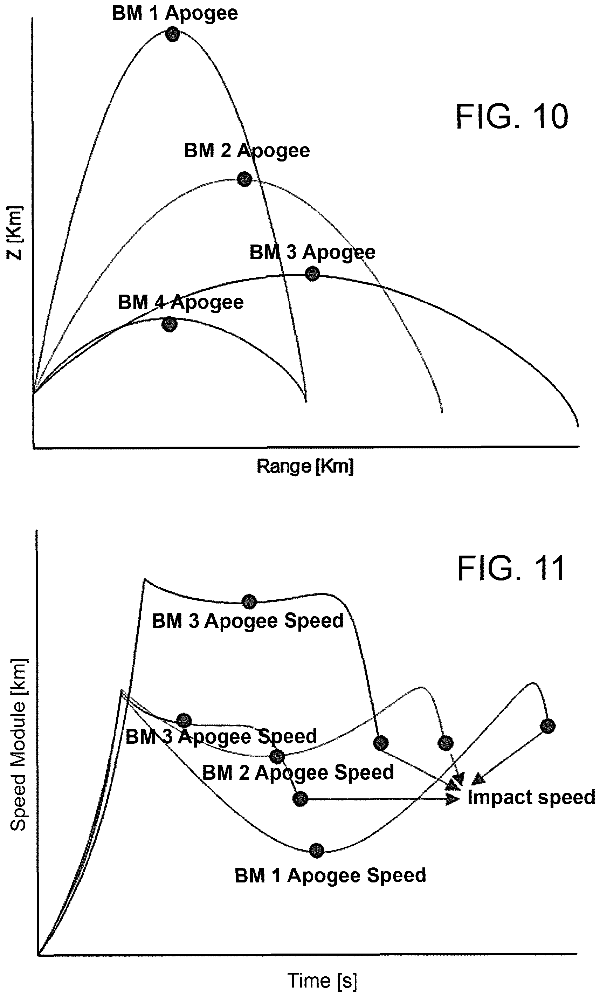

With regard to the identification of the BMs, if the track data has been classified as a BM threat, (Figure 10 and Figure 11 respectively show the trajectories and the speed module as a function of time of four types of BMs) the probability of the radar track belonging to each of the BM types present in the database is calculated both by means of a Bayesian network and by means of an MNN network.

As an example, the "confusion matrix" is given to evaluate the "accurate" recognition of the BMs in Figure 10, assuming to use:

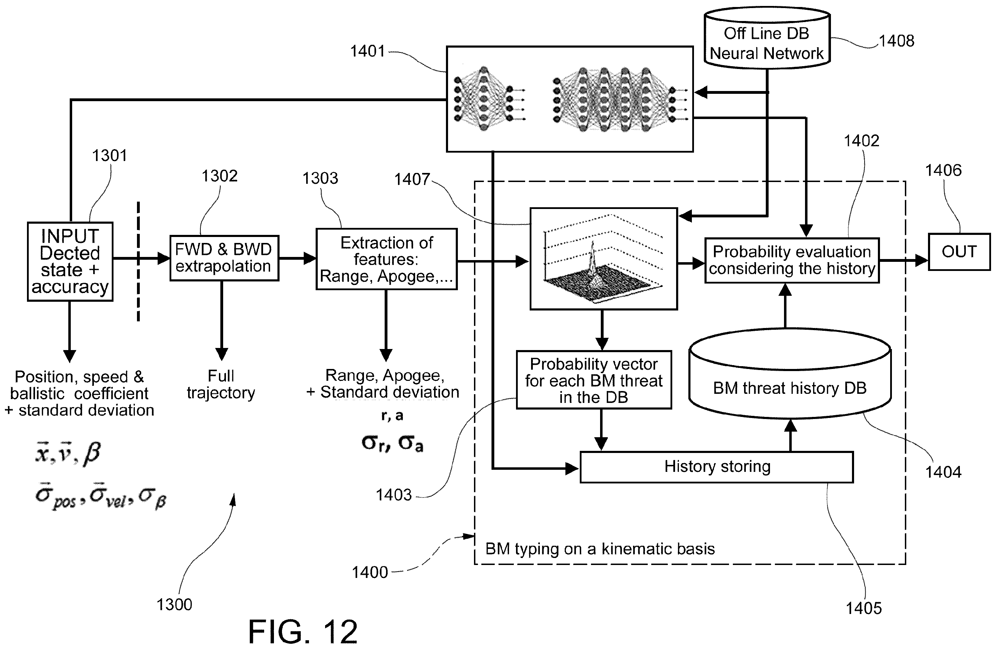

- a neural network which takes as input: Range, Apogee, speed module at impact, FPA at impact (data reconstructed from the data track by extrapolating backwards or forwards). To obtain such data, with reference to Figure 12 (better detailed below), the track data acquired in 1301 is processed: the trajectory of the object-threat is reconstructed in 1302 (with known ballistic methods) and in 1303 the characteristic data of interest, such as, for example, the range, the apogee, the FPA at impact, the speed at impact, the covariance matrix with the standard deviations of these quantities, are extracted;

- - a neural network trained using altitude, velocity module and FPA (provided or extracted from the given track).

The confusion matrices are the following respectively for the two assumptions above:

**Training Confusion Matrix**

| Output Class | Target 1 | Target 2 | Target 3 | Target 4 | |
|---|---|---|---|---|---|
| 1 | 68 / 24.3% | 0 / 0.0% | 0 / 0.0% | 0 / 0.0% | 100% / 0.0% |
| 2 | 0 / 0.0% | 71 / 25.4% | 0 / 0.0% | 0 / 0.0% | 100% / 0.0% |
| 3 | 0 / 0.0% | 0 / 0.0% | 66 / 23.6% | 0 / 0.0% | 100% / 0.0% |
| 4 | 0 / 0.0% | 0 / 0.0% | 0 / 0.0% | 75 / 26.8% | 100% / 0.0% |
| | 100% / 0.0% | 100% / 0.0% | 100% / 0.0% | 100% / 0.0% | 100% / 0.0% |

Target Class

**Validation Confusion Matrix**

| Output Class | Target 1 | Target 2 | Target 3 | Target 4 | |
|---|---|---|---|---|---|
| 1 | 16 / 26.7% | 0 / 0.0% | 0 / 0.0% | 0 / 0.0% | 100% / 0.0% |
| 2 | 0 / 0.0% | 17 / 28.3% | 0 / 0.0% | 0 / 0.0% | 100% / 0.0% |
| 3 | 0 / 0.0% | 0 / 0.0% | 16 / 26.7% | 0 / 0.0% | 100% / 0.0% |
| 4 | 0 / 0.0% | 0 / 0.0% | 0 / 0.0% | 11 / 18.3% | 100% / 0.0% |
| | 100% / 0.0% | 100% / 0.0% | 100% / 0.0% | 100% / 0.0% | 100% / 0.0% |

Target Class

**Test Confusion Matrix**

| Output Class | Target 1 | Target 2 | Target 3 | Target 4 | |
|---|---|---|---|---|---|
| 1 | 16 / 26.7% | 0 / 0.0% | 0 / 0.0% | 0 / 0.0% | 100% / 0.0% |
| 2 | 0 / 0.0% | 12 / 20.0% | 0 / 0.0% | 0 / 0.0% | 100% / 0.0% |
| 3 | 0 / 0.0% | 0 / 0.0% | 18 / 30.0% | 0 / 0.0% | 100% / 0.0% |
| 4 | 0 / 0.0% | 0 / 0.0% | 0 / 0.0% | 14 / 23.3% | 100% / 0.0% |
| | 100% / 0.0% | 100% / 0.0% | 100% / 0.0% | 100% / 0.0% | 100% / 0.0% |

Target Class

**All Confusion Matrix**

| Output Class | Target 1 | Target 2 | Target 3 | Target 4 | |
|---|---|---|---|---|---|
| 1 | 100 / 25.0% | 0 / 0.0% | 0 / 0.0% | 0 / 0.0% | 100% / 0.0% |
| 2 | 0 / 0.0% | 100 / 25.0% | 0 / 0.0% | 0 / 0.0% | 100% / 0.0% |
| 3 | 0 / 0.0% | 0 / 0.0% | 100 / 25.0% | 0 / 0.0% | 100% / 0.0% |
| 4 | 0 / 0.0% | 0 / 0.0% | 0 / 0.0% | 100 / 25.0% | 100% / 0.0% |
| | 100% / 0.0% | 100% / 0.0% | 100% / 0.0% | 100% / 0.0% | 100% / 0.0% |

Target Class

**Training Confusion Matrix**

| Output Class | Target 1 | Target 2 | Target 3 | Target 4 | |
|---|---|---|---|---|---|
| 1 | 13235 / 16.7% | 369 / 0.5% | 4 / 0.0% | 2 / 0.0% | 97.2% / 2.8% |
| 2 | 324 / 0.4% | 26285 / 33.2% | 3 / 0.0% | 0 / 0.0% | 98.8% / 1.2% |
| 3 | 3 / 0.0% | 2 / 0.0% | 21198 / 26.8% | 3 / 0.0% | 100.0% / 0.0% |
| 4 | 0 / 0.0% | 0 / 0.0% | 1 / 0.0% | 17741 / 22.4% | 100.0% / 0.0% |
| | 97.6% / 2.4% | 98.6% / 1.4% | 100.0% / 0.0% | 100.0% / 0.0% | 99.1% / 0.9% |

Target Class

**Validation Confusion Matrix**

| Output Class | Target 1 | Target 2 | Target 3 | Target 4 | |
|---|---|---|---|---|---|
| 1 | 2843 / 16.8% | 85 / 0.5% | 0 / 0.0% | 0 / 0.0% | 97.1% / 2.9% |
| 2 | 85 / 0.5% | 5604 / 33.0% | 0 / 0.0% | 0 / 0.0% | 98.5% / 1.5% |
| 3 | 1 / 0.0% | 0 / 0.0% | 4584 / 27.0% | 0 / 0.0% | 100.0% / 0.0% |
| 4 | 0 / 0.0% | 0 / 0.0% | 2 / 0.0% | 3761 / 22.2% | 99.9% / 0.1% |
| | 97.1% / 2.9% | 98.5% / 1.5% | 100.0% / 0.0% | 100% / 0.0% | 99.0% / 1.0% |

Target Class

11

**Test Confusion Matrix**

| Output Class | Target 1 | Target 2 | Target 3 | Target 4 | |
|---|---|---|---|---|---|
| 1 | 2827 / 16.7% | 73 / 0.4% | 0 / 0.0% | 0 / 0.0% | 97.5% / 2.5% |
| 2 | 80 / 0.5% | 5582 / 32.9% | 0 / 0.0% | 0 / 0.0% | 98.6% / 1.4% |
| 3 | 2 / 0.0% | 0 / 0.0% | 4507 / 26.6% | 0 / 0.0% | 100.0% / 0.0% |
| 4 | 0 / 0.0% | 0 / 0.0% | 1 / 0.0% | 3893 / 22.9% | 100.0% / 0.0% |
| | 97.2% / 2.8% | 98.7% / 1.3% | 100.0% / 0.0% | 100% / 0.0% | 99.1% / 0.9% |

Target Class

**All Confusion Matrix**

| Output Class | Target 1 | Target 2 | Target 3 | Target 4 | |
|---|---|---|---|---|---|
| 1 | 18905 / 16.7% | 527 / 0.5% | 4 / 0.0% | 2 / 0.0% | 97.3% / 2.7% |
| 2 | 489 / 0.4% | 37471 / 33.1% | 3 / 0.0% | 0 / 0.0% | 98.7% / 1.3% |
| 3 | 6 / 0.0% | 2 / 0.0% | 30289 / 26.8% | 3 / 0.0% | 100.0% / 0.0% |
| 4 | 0 / 0.0% | 0 / 0.0% | 4 / 0.0% | 25395 / 22.5% | 100.0% / 0.0% |
| | 97.4% / 2.6% | 98.6% / 1.4% | 100.0% / 0.0% | 100.0% / 0.0% | 99.1% / 0.9% |

Target Class

### Bayesian Network for BM Identification

With reference to Figure 12, the track data acquired in 1301 is processed in the system 1300: the trajectory of the object-threat is reconstructed in 1302 (with known ballistic methods) and in 1303 characteristic data, such as, for example, the range, the apogee, the FPA at impact, the speed at impact, the covariance matrix with the standard deviations of these quantities, are extracted.

Downstream of the processing in Figure 12, the extracted data will be processed in 1400 by means of a Bayesian network 1407 (which will use two or more of the variables selected among the values of apogee, FPA at impact, speed at impact, Range of each BM of the database generated off-line). The probability 1403 of each type of BM will be calculated using Bayes' theorem according to the same methodology used for classification.

### MNN network for BM identification

Again with reference to Figure 12, additionally or alternatively, a neural network 1401 trained on a specific off-line database 1408 may be used. It is possible to use a historical database of identifications 1404 and a basis for this to refine the probability 1406 in 1402. Of course, the historical database may be updated in 1405 according to the various identifications.

The network will provide the probability of the track belonging to one of the BMs.

As for the classification, either a Bayesian network or an MNN network or both may be used (probability given by the average of the two).

The choice will depend on the initial database and the results obtained in the testing step.

The results are the above confusion matrices.

### Examples of probability of BM identification obtained in specific cases

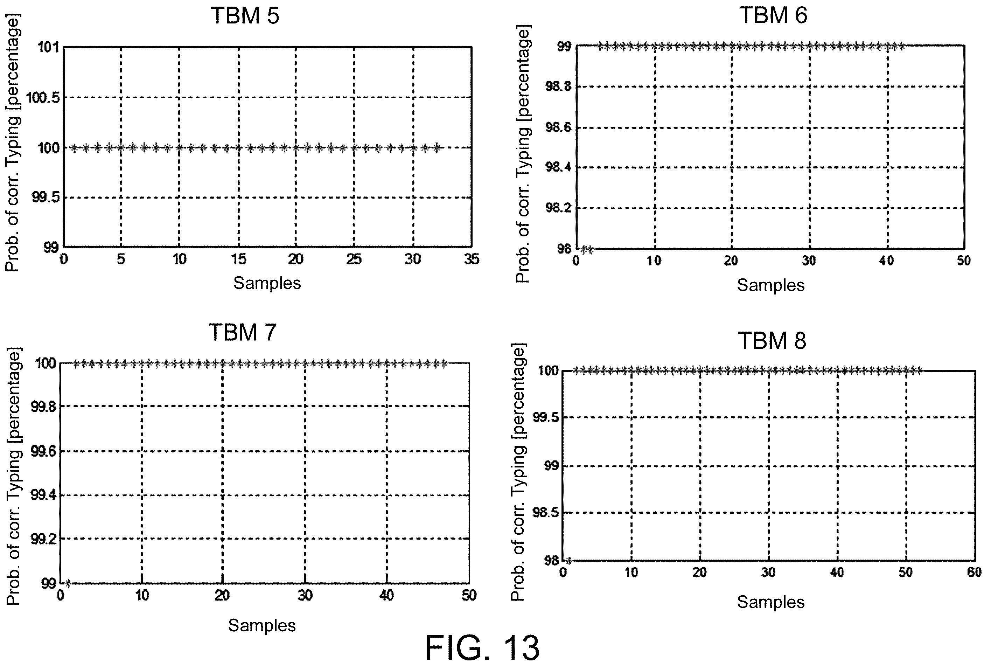

Figure 13 shows the probabilities (ordinate) of the type of BM for 4 cases of identification of a BM threat (i.e., the probability that the track under examination is really of the identified BM type). The track over time is provided in the abscissas. As it may be seen, the classification with the method of the invention is excellent.

### Advantages of the invention

The suggested architecture allows optimizing the Threat Evaluation and Weapon Assignment chain (TEWA) of a missile defense system (also operating in stand-alone mode) and is preparatory to a better Predicted Impact Point (PIP) prediction, to the optimization of the interceptor missile mid-course (and therefore of the kill probability) and to avoid fratricidal events in highly challenging operational contexts.

It allows classifying, sub-classifying, discriminating and identifying threats with a very high probability of success.

The suggested architecture is extremely flexible and robust, since it is based on the use of kinematic and threat performance databases (classified as Ballistic Missiles and ABTs - Air Breathing Threats-ABT) and may be easily adapted to the specific operational scenario in which the defense system or systems are deployed, modulating it appropriately on potential threats.

Among the advantages of the suggested CDI architecture there are:

- the use of robust features;
- the use of cutting-edge algorithms, such as neural networks, which ensure high performance;
- in terms of probability of correct classification, discrimination, identification of threats (classification of the order of 99% reliability even in complex scenarios);
- the robustness given by the merging of the outputs of several algorithms;
- the ability to manage extremely large threat databases without degrading performance;
- the computational speed;
- an architecture which is highly adaptable to different operational scenarios; and
- a reusable and modular architecture for different architectures C2 and Radar.

Furthermore, contrary to the method of the patent US9292792, the tests carried out show the convergence of the method without assumptions on torques and rotational movements or electrical lengths, without dynamic reductions of the feature space and without the neural networks used leading to ambiguity in cases of unexpected variations in the radar data. This is because, contrary to such prior art, each result of a calculation step is probabilistic, i.e., it is associated with a probability of belonging to a class, at each iteration the probability of the previous iteration is used, and the final result takes into account all probabilities and not only the thresholds on features, proving to be accurate and reliable.

The method according to the invention only uses the classical radar track (substantially, the ID, the acquisition time, the position, the speed components and the covariance matrix of the corresponding errors), and excludes the use of measurements of the length of the target or of the spin (tumbling) as described above, quantities which, as a matter of fact, are very difficult to obtain. Therefore, the method according to the invention exclusively needs the radar sensor.

Furthermore, in the patent US9292792 the "identification" is not described, but only the "classification", i.e., the discrimination between ballistic and non-ballistic is carried out, but then the "type" of ballistic missile is not recognized, as it happens in the present invention, among many types (the classification is simpler and more general).

Another difference according to an aspect of the invention is on the identification of the ballistic threat. One of the neural networks described above is trained with variables obtained after a post-processing by calculating the range, apogee and speed of impact from the radar track in input: variables which are then provided in input to the neural network.

Preferred embodiments were described above, and variants of the present invention were suggested, but it is understood that those skilled in the art may make modifications and changes without departing from the related scope of protection, as defined by the appended claims.

**Claims**

1. A method for the classification, discrimination and identification of an Air Breathing Target (ABT) or Ballistic Missiles (BM) threat from a signal acquired by a radar, comprising the following step:

   A. acquiring (111), from the radar (101,102), a vector state of a track, the vector state comprising ID, acquisition time, position, speed components,
   the method being **characterised in that** the vector state further comprises a covariance matrix of the corresponding errors and a sure-classification parameter, said sure-classification parameter being equal to 1 if the track has been classified by comparison with a threshold or 0 if the track has not been classified by comparison with a threshold, and the method further comprises the following steps:

   B. if the sure-classification parameter of the vector state of the track is equal to 0, classifying (110, 103) said track by carrying out the following sub-steps:

      B1. comparing a first set of kinematic track features obtained based on said vector state with a respective set of kinematic ABT thresholds and with a respective set of kinematic BM thresholds stored in a kinematic threshold database (104);
      B2. determining whether the track belongs to a BM or ABT threat or to an overlap situation depending on whether at least one of said first set of kinematic track features is lower or higher than the thresholds of said respective set of kinematic ABT thresholds and/or than the thresholds of said respective set of kinematic BM thresholds;
      B3. if the track is determined to belong to a BM or ABT threat in step B2, associating the ID with the classification as an ABT or BM threat based on the result of step B2, wherein a sure-classification parameter is further associated with the classification;

B4. if the track is determined to belong to an overlap situation in step B2, running:

- at least a first trained ABT and BM threat recognition algorithm (107) trained on data from a threat database (112) comprising a second set of kinematic track features, to output a probability of classification as an ABT or BM threat; and/or
- at least a first Bayesian algorithm, based on data from an ABT threat database and from a BM threat database (112), comprising mean values and variances of a third set of kinematic track features comprising the Flight Path Angle and the speed module, to output a probability of classification as an ABT or BM threat;

associating the probability of classification as an ABT or BM threat to the ID of the track based on the output probabilities from the first trained algorithm and/or the first Bayesian algorithm;

otherwise, if the sure-classification parameter of the vector state of the track is equal to 1, carrying out the following sub-steps:

B5. running:

- at least a first trained ABT and BM threat recognition algorithm (104) trained on data from a threat database (112), the data comprising said fourth set of kinematic track features, to output a probability of classification as an ABT or BM threat; and/or
- at least a first Bayesian algorithm, based on data (104) extrapolated from an ABT threat database and a BM threat database (112) comprising mean values and variances of a fifth set of kinematic track features comprising the Flight Path Angle and the speed module, to output a probability of classification as an ABT or BM threat;

B6. associating the probability of classification as an ABT or BM threat to the ID of the track based on the output probabilities from the trained algorithm and/or the Bayesian algorithm of step B5;
C. discriminating a sub-type of threat classified in step B, by carrying out one of the following steps depending on the classification of the threat:

if the threat has been classified as ABT in step B:

C1. running at least a second Bayesian algorithm, based on data (104) extrapolated from said ABT threat database (112), comprising mean values and variances of a sixth set of kinematic track features comprising the Flight Path Angle and the speed module, for each sub-type of ABT threat, said at least a second Bayesian algorithm outputting probability of sub-classification and identification of the specific threat in the ABT sub-classification;
C2. if the threat has been classified as a BM in step B, and if the threat has not already been discriminated as irrelevant, carrying out the following sub-steps:

- running at least a third Bayesian algorithm, based on data (104) extrapolated from said BM threat database (112), comprising mean values and variances of a seventh set of kinematic track features comprising the Flight Path Angle and the speed module, for each sub-type of BM threat, said at least a third Bayesian algorithm outputting a probability of identification of the specific BM threat; and/or
- running at least a second trained BM threat discrimination algorithm (107) trained on data of said BM threat database (104) comprising an eighth set of kinematic track features comprising the Flight Path Angle and the speed module, to output a probability of identification of the specific BM threat.

2. A method according to claim 1, wherein said second, third, fourth, fifth, sixth and seventh sets of kinematic threat features further comprise the z component of the speed and the down range, wherein the z component of the speed is the speed component along the direction of gravity.

3. A method according to claim 1 or 2, wherein between step B and step C the following further step D is carried out for the BM threats, comprising the sub-steps of:
running at least a third trained BM threat discrimination algorithm (104) trained on data from said BM threat database (112) further comprising an identifier of discrimination between relevant and non-relevant BM threats, to output a probability of discrimination as a relevant BM threat.

4. A method according to one or more of claims 1 to 3, wherein, in step C2, when running said third Bayesian algorithm, the features of said seventh set of kinematic features (104) extrapolated in said BM threat database (112) comprise apogee, range, apogee speed module, impact speed module, FPA angle at impact of the ballistic threat, as well as corresponding standard deviations obtained based on the radar track.

5. A method according to one or more of claims 1 to 4, wherein the vector state comprises one or more of ballistic coefficient, cluster ID, track state.

6. A method according to one or more of claims 1 to 5, wherein one or more of said first, second, third, fourth, fifth, sixth and seventh sets of kinematic track features comprise kinematic track features selected from the group comprising: ABT speed module, BM speed module, ABT FPA angle, BM FPA angle, vertical speed component, horizontal speed module (referred to as a down range), and altitude.

7. A method according to one or more of claims 1 to 6, wherein the classifications, sub-classifications, and identifications of threats for a plurality of tracks are stored in a historical database, and the data of said historical database are used to correct the probability of identification as a BM or ABT threat.

8. A method according to one or more of claims 1 to 7, wherein, in steps B4 and/or B5 and/or C2, both the corresponding Bayesian algorithm and the corresponding trained algorithm are used, averaging the results of each algorithm.

9. A system for classifying, discriminating and identifying an ABT or BM threat from a signal acquired by a radar, comprising:

- a radar;
- a computer; and
- one or more databases of tracks of ABT or BM threats;

wherein said computer and said one or more databases are configured to perform the method according to any one of claims 1 to 8.


**Patentansprüche**

1. Verfahren zur Klassifizierung, Unterscheidung und Identifizierung einer Bedrohung durch ein Air Breathing Target (ABT) oder durch ballistische Raketen (BM) aus einem Signal, das von einem Radar erfasst wird, umfassend den folgenden Schritt:

A. Erfassen (111), von einem Radar (101, 102) eines Trägerzustands einer Spur, der Trägerzustand umfassend ID, Erfassungszeit, Position und Geschwindigkeitskomponenten, wobei das Verfahren **dadurch gekennzeichnet ist, dass** der Trägerzustand ferner eine Kovarianzmatrix der entsprechenden Fehler und einen Sicherheitsklassifizierung-Parameter umfasst, wobei der Sicherheitsklassifizierung-Parameter gleich 1 ist, wenn die Spur durch Vergleich mit einem Schwellenwert klassifiziert wurde, oder gleich 0 ist, wenn die Spur nicht durch Vergleich mit einem Schwellenwert klassifiziert wurde, und das Verfahren ferner die folgenden Schritte umfasst:
B. wenn der Sicherheitsklassifizierung-Parameter des Trägerzustands der Spur gleich 0 ist, Klassifizieren (110, 103) der Spur durch Durchführen der folgenden Unterschritte:

B1. Vergleichen einer ersten Gruppe kinematischer Spurmerkmale, die basierend auf dem Trägerzustand erhalten wurde, mit einer jeweiligen Gruppe kinematischer ABT-Schwellenwerte und mit einer jeweiligen Gruppe kinematischer BM-Schwellenwerte, die in einer kinematischen Schwellenwertdatenbank (104) gespeichert wurden;
B2. Bestimmen, ob die Spur zu einer BM- oder ABT-Bedrohung oder zu einer Überlappungssituation in Abhängigkeit davon gehört, ob mindestens eine der ersten Gruppe kinematischer Spurmerkmale kleiner oder größer als die Schwellenwerte der jeweiligen Gruppe kinematischer ABT-Schwellenwerte und/oder als die Schwellenwerte der jeweiligen Gruppe kinematischer BM-Schwellenwerte ist;
B3. wenn es bestimmt wird, dass die Spur in Schritt B2 zu einer BM- oder einer ABT-Bedrohung gehört, Zuordnen der ID der Klassifizierung als eine ABT- oder BM-Bedrohung basierend auf dem Ergebnis von Schritt B2, wobei ein Sicherheitsklassifizierung-Parameter ferner der Klassifizierung zugeordnet wird;

B4. wenn es bestimmt wird, dass die Spur in Schritt B2 zu einer Überlappungssituation gehört, Laufen:

- mindestens eines ersten trainierten ABT- und BM-Bedrohungserkennungsalgorithmus (107), der mit Daten aus einer Bedrohungsdatenbank (112) trainiert wurde, umfassend eine zweite Gruppe kinematischer Spurmerkmale, um eine Klassifizierungswahrscheinlichkeit als eine ABT- oder BM-Bedrohung auszugeben; und/oder
- mindestens eines ersten Bayes-Algorithmus, basierend auf Daten aus einer ABT-Bedrohungsdatenbank und einer BM-Bedrohungsdatenbank (112), umfassend Mittelwerte und Varianzen einer dritten Gruppe kinematischer Spurmerkmale, umfassend den Flugbahnwinkel und das Geschwindigkeitsmodul, um eine Klassifizierungswahrscheinlichkeit als eine ABT- oder BM-Bedrohung auszugeben;

Zuordnen der Klassifizierungswahrscheinlichkeit als eine ABT- oder BM-Bedrohung der ID der Spur basierend auf den Ausgabewahrscheinlichkeiten des ersten trainierten Algorithmus und/oder des ersten Bayes-Algorithmus;

andernfalls, wenn der Sicherheitsklassifizierung-Parameter des Trägerzustands der Spur gleich 1 ist, Durchführen der folgenden Unterschritte:

B5. Laufen:

- mindestens eines ersten trainierten ABT- und BM-Bedrohungserkennungsalgorithmus (104), der mit Daten aus einer Bedrohungsdatenbank (112) trainiert wurde, die Daten umfassend die vierte Gruppe kinematischer Spurmerkmale, um eine Klassifizierungswahrscheinlichkeit als eine ABT- oder BM-Bedrohung; und/oder

mindestens eines ersten Bayes-Algorithmus basierend auf Daten (104), die aus einer ABT-Bedrohungsdatenbank und einer BM-Bedrohungsdatenbank (112) extrapoliert wurden, umfassend Mittelwerte und Varianzen einer fünften Gruppe kinematischer Spurmerkmale, umfassend den Flugbahnwinkel und das Geschwindigkeitsmodul, um eine Klassifizierungswahrscheinlichkeit als eine ABT- oder BM-Bedrohung auszugeben;

B6. Zuordnen der Klassifizierungswahrscheinlichkeit als eine ABT- oder BM-Bedrohung der ID der Spur basierend auf den Ausgabewahrscheinlichkeiten von dem trainierten Algorithmus und/oder dem Bayes-Algorithmus in Schritt B5;

C. Unterscheiden eines Untertyps der Bedrohung, die in Schritt B klassifiziert wurde durch Durchführen eines der folgenden Schritte in Abhängigkeit von der Klassifizierung der Bedrohung:

wenn die Bedrohung als ABT in Schritt B klassifiziert wurde:

C1. Laufen mindestens eines zweiten Bayes-Algorithmus, basierend auf Daten (104), die aus der ABT-Bedrohungsdatenbank (112) extrapoliert wurden umfassend Mittelwerte und Varianzen einer sechsten Gruppe kinematischer Spurmerkmale, umfassend den Flugbahnwinkel und das Geschwindigkeitsmodul, für jeden Untertyp der ABT-Bedrohung, wobei der mindestens eine zweite Bayes-Algorithmus eine Wahrscheinlichkeit zur Unterklassifizierung und Identifizierung der spezifischen Bedrohung in der ABT-Unterklassifizierung ausgibt;

C2. wenn die Bedrohung in Schritt B als eine BM klassifiziert wurde und wenn die Bedrohung nicht bereits als irrelevant unterschieden wurde, Durchführen der folgenden Unterschritte:

- Laufen mindestens einem dritten Bayes-Algorithmus basierend auf Daten (104), die aus der BM-Bedrohungsdatenbank (112) extrapoliert wurden, umfassend Mittelwerte und Varianzen einer siebten Gruppe kinematischer Spurmerkmale, umfassend den Flugbahnwinkel und das Geschwindigkeitsmodul, für jeden Untertyp der BM-Bedrohung, wobei der mindestens eine dritte Bayes-Algorithmus eine Wahrscheinlichkeit zur Identifizierung der spezifischen BM-Bedrohung ausgibt; und/oder
- Laufen mindestens eines zweiten trainierten BM-Bedrohungsunterscheidungsalgorithmus (107), der mit Daten aus der BM-Bedrohungsdatenbank (104) trainiert wurde umfassend eine achte Gruppe kinematischer Spurmerkmale umfassend den Flugbahnwinkel und das Geschwindigkeitsmodul, um eine Wahrscheinlichkeit zur Identifizierung der spezifischen BM-Bedrohung auszugeben.

2. Verfahren nach Anspruch 1, wobei die zweite, dritte, vierte, fünfte, sechste und siebte Gruppe kinematischer Bedrohungsmerkmale ferner die z-Komponente der Geschwindigkeit und des Horizontalabstands umfassen, wobei die z-Komponente der Geschwindigkeit die Geschwindigkeitskomponente entlang der Richtung der Schwerkraft ist.

3. Verfahren nach Anspruch 1 oder 2, wobei zwischen Schritt B und Schritt C der folgende zusätzliche Schritt D für die BM-Bedrohungen durchgeführt wird, umfassend die folgenden Unterschritte:
Laufen mindestens eines dritten trainierten BM-Bedrohungsunterscheidungsalgorithmus (104), der mit Daten aus der BM-Bedrohungsdatenbank (112) trainiert wurde, ferner umfassend eine Kennung zur Unterscheidung zwischen relevanten und nicht relevanten BM-Bedrohungen, um eine Wahrscheinlichkeit der Unterscheidung als eine relevante BM-Bedrohung auszugeben.

4. Verfahren nach einem der Ansprüche 1 bis 3, wobei in Schritt C2 beim Laufen des dritten Bayes-Algorithmus die Merkmale der siebten Gruppe kinematischer Merkmale (104), die in der BM-Bedrohungsdatenbank (112) extrapoliert wurden, Apogäum, Reichweite, Apogäum-Geschwindigkeitsmodul, Aufprall-Geschwindigkeitsmodul, Flugbahnwinkel beim Aufprall der ballistischen Bedrohung sowie entsprechende Standardabweichungen umfassen, die basierend auf der Radarspur erhalten wurden.

5. Verfahren nach einem der Ansprüche 1 bis 4, wobei der Trägerzustand ein oder mehrere der folgenden umfasst: ballistischer Koeffizient, Cluster-ID, Spurenzustand.

6. Verfahren nach einem der Ansprüche 1 bis 5, wobei eine oder mehrere der ersten, zweiten, dritten, vierten, fünften, sechsten und siebten Gruppen kinematischer Spurmerkmale umfassen, die aus der Gruppe bestehend aus: ABT-Geschwindigkeitsmodul, BM-Geschwindigkeitsmodul, ABT-Flugbahnwinkel, BM-Flugbahnwinkel, vertikale Geschwindigkeitskomponente, horizontales Geschwindigkeitsmodul (als Horizontalabstand bezeichnet) und Höhe, ausgewählt werden.

7. Verfahren nach einem der Ansprüche 1 bis 6, wobei die Klassifizierungen, Unterklassifizierungen und Identifizierungen von Bedrohungen für eine Vielzahl von Spuren in einer historischen Datenbank gespeichert werden, und wobei die Daten dieser historischen Datenbank verwendet werden, um die Wahrscheinlichkeit der Identifizierung als eine BM- oder ABT-Bedrohung zu korrigieren.

8. Verfahren nach einem der Ansprüche 1 bis 7, wobei in den Schritten B4 und/oder B5 und/oder C2 sowohl der entsprechende Bayes-Algorithmus als auch der entsprechende trainierte Algorithmus verwendet werden, wobei die Ergebnisse jedes Algorithmus gemittelt werden.

9. System zur Klassifizierung, Unterscheidung und Identifizierung einer ABT- oder BM-Bedrohung aus einem von einem Signal, das von einem Radar erfasst wird, umfassend:

   - ein Radar;
   - einen Computer; und
   - eine oder mehrere Datenbanken mit Spuren von ABT- oder BM-Bedrohungen;

   wobei der Computer und eine oder mehreren Datenbanken dazu konfiguriert sind, das Verfahren nach einem der Ansprüche 1 bis 8 durchzuführen.

**Revendications**

1. Procédé de classification, de discrimination et d'identification d'une menace de cible à propulsion aérienne (ABT) ou de missiles balistiques (BM) à partir d'un signal acquis par un radar, comprenant l'étape suivante :

   A. acquisition (111), à partir du radar (101,102), d'un vecteur d'état d'une piste, le vecteur d'état comprenant un identifiant (ID), un temps d'acquisition, une position, des composantes de vitesse,
   le procédé étant **caractérisé en ce que** le vecteur d'état comprend en outre une matrice de covariance des erreurs correspondantes et un paramètre de classification-sûre, ledit paramètre de classification-sûre étant égal à 1 si la piste a été classifiée par comparaison à un seuil, ou égal à 0 si la piste n'a pas été classifiée par comparaison à un seuil, et le procédé comprenant en outre les étapes suivantes :
   B. si le paramètre de classification-sûre du vecteur d'état de la piste est égal à 0, classification (110,103) de ladite piste en exécutant les sous-étapes suivantes :

      B1. comparaison d'un premier ensemble de caractéristiques cinématiques de la piste, obtenues sur la base dudit vecteur d'état, avec un ensemble respectif de seuils cinématiques ABT et avec un ensemble respectif de seuils cinématiques BM stockés dans une base de données de seuils cinématiques (104) ;

B2. détermination si la piste appartient à une menace BM ou ABT, ou à une situation de chevauchement, selon que au moins une desdites caractéristiques du premier ensemble est inférieure ou supérieure aux seuils dudit ensemble respectif de seuils cinématiques ABT et/ou aux seuils dudit ensemble respectif de seuils cinématiques BM ;

B3. si la piste est déterminée comme appartenant à une menace BM ou ABT à l'étape B2, association de l'ID avec la classification en tant que menace ABT ou BM sur la base du résultat de l'étape B2, un paramètre de classification-sûre étant en outre associé à la classification ;

B4. si la piste est déterminée comme appartenant à une situation de chevauchement à l'étape B2, exécution :

- au moins d'un premier algorithme entraîné de reconnaissance de menace ABT et BM (107), entraîné sur des données provenant d'une base de données de menaces (112), comprenant un deuxième ensemble de caractéristiques cinématiques de la piste, pour produire une probabilité de classification en tant que menace ABT ou BM ; et/ou

- au moins d'un premier algorithme bayésien, basé sur des données provenant d'une base de données de menace ABT et d'une base de données de menace BM (112), comprenant des valeurs moyennes et des variances d'un troisième ensemble de caractéristiques cinématiques de la piste comprenant l'angle de trajectoire de vol et le module de vitesse, pour produire une probabilité de classification en tant que menace ABT ou BM ;

association de la probabilité de classification en tant que menace ABT ou BM à l'ID de la piste sur la base des probabilités produites par le premier algorithme entraîné et/ou le premier algorithme bayésien ;

autrement, si le paramètre de classification-sûre du vecteur d'état de la piste est égal à 1, exécution des sous-étapes suivantes :

B5. exécution :

- au moins d'un premier algorithme entraîné de reconnaissance de menace ABT et BM (104), entraîné sur des données provenant d'une base de données de menaces (112), les données comprenant ledit quatrième ensemble de caractéristiques cinématiques de la piste, pour produire une probabilité de classification en tant que menace ABT ou BM ; et/ou

- au moins d'un premier algorithme bayésien, basé sur des données (104) extrapolées à partir d'une base de données de menace ABT et d'une base de données de menace BM (112), comprenant des valeurs moyennes et des variances d'un cinquième ensemble de caractéristiques cinématiques de la piste comprenant l'angle de trajectoire de vol et le module de vitesse, pour produire une probabilité de classification en tant que menace ABT ou BM ;

B6. association de la probabilité de classification en tant que menace ABT ou BM à l'ID de la piste sur la base des probabilités produites par l'algorithme entraîné et/ou l'algorithme bayésien de l'étape B5 ;

C. discrimination d'un sous-type de menace classifiée à l'étape B, en exécutant l'une des étapes suivantes en fonction de la classification de la menace :

si la menace a été classifiée comme ABT à l'étape B :

C1. exécution d'au moins un deuxième algorithme bayésien, basé sur des données (104) extrapolées à partir de ladite base de données de menace ABT (112), comprenant des valeurs moyennes et des variances d'un sixième ensemble de caractéristiques cinématiques de la piste comprenant l'angle de trajectoire de vol et le module de vitesse, pour chaque sous-type de menace ABT, ledit au moins un deuxième algorithme bayésien produisant une probabilité de sous-classification et d'identification de la menace spécifique dans la sous-classification ABT ;

C2. si la menace a été classifiée comme BM à l'étape B, et si la menace n'a pas déjà été discriminée comme non pertinente, exécution des sous-étapes suivantes :

- exécution d'au moins un troisième algorithme bayésien, basé sur des données (104) extrapolées à partir de ladite base de données de menace BM (112), comprenant des valeurs moyennes et des variances d'un septième ensemble de caractéristiques cinématiques de la piste comprenant l'angle de trajectoire de vol et le module de vitesse, pour chaque sous-type de menace BM, ledit au moins un troisième algorithme bayésien produisant une probabilité d'identification de la menace BM spécifique ; et/ou

- exécution d'au moins un deuxième algorithme entraîné de discrimination de menace BM (107), entraîné sur des données de ladite base de données de menace BM (104) comprenant un huitième ensemble de caractéristiques cinématiques de la piste comprenant l'angle de trajectoire de vol et le module de vitesse, pour produire une probabilité d'identification de la menace BM spécifique.

2. Procédé selon la revendication 1, dans lequel lesdits deuxième, troisième, quatrième, cinquième, sixième et septième ensembles de caractéristiques cinématiques de la menace comprennent en outre la composante z de la vitesse et la portée horizontale, la composante z de la vitesse étant la composante de vitesse selon la direction de la gravité.

3. Procédé selon la revendication 1 ou 2, dans lequel, entre l'étape B et l'étape C, l'étape supplémentaire D est exécutée pour les menaces BM, comprenant les sous-étapes suivantes :
exécution d'au moins un troisième algorithme entraîné de discrimination de menace BM (104), entraîné sur des données provenant de ladite base de données de menace BM (112), comprenant en outre un identifiant de discrimination entre menaces BM pertinentes et non pertinentes, pour produire une probabilité de discrimination en tant que menace BM pertinente.

4. Procédé selon l'une quelconque des revendications 1 à 3, dans lequel, à l'étape C2, lors de l'exécution dudit troisième algorithme bayésien, les caractéristiques dudit septième ensemble de caractéristiques cinématiques (104) extrapolées dans ladite base de données de menace BM (112) comprennent l'apogée, la portée, le module de vitesse à l'apogée, le module de vitesse à l'impact, l'angle de trajectoire de vol à l'impact de la menace balistique, ainsi que les écarts-types correspondants obtenus à partir de la piste radar.

5. Procédé selon l'une quelconque des revendications 1 à 4, dans lequel le vecteur d'état comprend un ou plusieurs des éléments suivants : coefficient balistique, identifiant (ID) de grappe, état de la piste.

6. Procédé selon l'une quelconque des revendications 1 à 5, dans lequel un ou plusieurs desdits premier, deuxième, troisième, quatrième, cinquième, sixième et septième ensembles de caractéristiques cinématiques de la piste comprennent des caractéristiques cinématiques sélectionnées dans le groupe comprenant : module de vitesse ABT, module de vitesse BM, angle de trajectoire de vol (FPA) ABT, angle de trajectoire de vol (FPA) BM, composante verticale de la vitesse, module de vitesse horizontale (appelée portée horizontale), et altitude.

7. Procédé selon l'une quelconque des revendications 1 à 6, dans lequel les classifications, sous-classifications et identifications de menaces pour une pluralité de pistes sont stockées dans une base de données historique, et les données de ladite base de données historique sont utilisées pour corriger la probabilité d'identification en tant que menace BM ou ABT.

8. Procédé selon l'une quelconque des revendications 1 à 7, dans lequel, aux étapes B4 et/ou B5 et/ou C2, à la fois l'algorithme bayésien correspondant et l'algorithme entraîné correspondant sont utilisés, en moyennant les résultats de chaque algorithme.

9. Système de classification, discrimination et identification d'une menace ABT ou BM à partir d'un signal acquis par un radar, comprenant :

   - un radar ;
   - un ordinateur ; et
   - une ou plusieurs bases de données de pistes de menaces ABT ou BM ;

dans lequel ledit ordinateur et ladite ou lesdites une ou plusieurs bases de données sont configurés pour exécuter le procédé selon l'une quelconque des revendications 1 à 8.

FIG. 1

FIG. 2

FIG. 3

FIG. 4

FIG. 5

Average speed and FPA in a height range

FIG. 6

EP 4 043 922 B1

FIG. 7

FIG. 8

FIG. 9

FIG. 10

BM 1 Apogee

BM 2 Apogee

BM 3 Apogee

BM 4 Apogee

Z [Km]

Range [Km]

FIG. 11

BM 3 Apogee Speed

BM 3 Apogee Speed

BM 2 Apogee Speed

Impact speed

BM 1 Apogee Speed

Speed Module [km]

Time [s]

FIG. 12

FIG. 13

# EP 4 043 922 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9292792 B